# EUROPEAN PATENT SPECIFICATION

(11) **EP 2 945 349 B1**
(45) Date of publication and mention of the grant of the patent: **08.04.2020**
(21) Application number: 14305711.5
(22) Date of filing: 15.05.2014
(51) Int. Cl.: H04L 29/08

(54) **Computer implemented gateway**
Computerimplementiertes Gateway
Passerelle mis en oeuvre par ordinateur

(43) Date of publication of application: 18.11.2015
(73) Proprietor: Amadeus S.A.S., 06410 Biot (FR)
(72) Inventor: Maes, Wim, 2600 Berchem (BE); Colardyn, Frederik M., 2221 Booischot (BE); Soroush Karimi, Rad, 2610 Wilrijk (BE); Torfs, Ben, 06600 Antibes (FR); Van Bouchaute, Jurgen, 9080 Lochristi (BE)
(74) Representative: Samson & Partner Patentanwälte mbB

(56) References cited:
- WO-A1-2009/102790
- US-A1- 2008 140 857
- US-A1- 2009 193 433
- US-A1- 2010 080 148
- US-A1- 2010 150 169
- US-A1- 2012 143 634

## Description

The current invention relates to a computer implemented gateway. Computer implemented gateways are for example known from WO2009102790A1. WO2009102790A1 for example describes a computer implemented gateway comprising an Enterprise Service Bus (ESB) architecture. The ESB architecture comprises an ESB for performing data transformations, more in particular transferring messages in between different middleware services, each middleware service performing a particular function. The ESB thereto comprises a plurality of data processing components each arranged for receiving first business data via at least a first communication channel of the data processing component and generating in response to the arrival of the first business data a second business data, which is transmitted via a second communication channel of the data processing component. The respective data processing components are provided to interact with the respective middleware services and thus a flow of business data is being guided from an input endpoint to an output endpoint. The ESB further comprises a core component which is communicatively coupled to each of the data processing components via at least one of the communication channels of the respective data processing components. The core is arranged for controlling the flow of business data between the input endpoint and the output endpoint based on an execution data flow determined by an ESB configuration instance. WO2009102790A1 further describes that the execution data flow determined by the ESB configuration instance can depend on for example the properties of digital media contained in the business data. Therefore, depending on the type of digital media contained in the business data, the core may thus control the business data flow through the different data processing components.

However, although such conditional business data flow depending on the type of digital media contained in the business data provides the ESB architecture with dynamic properties, often a higher degree of flexibility is required. For example, often it is desired to substantially amend the execution data flow by, for example, substantially amending the data processing components which are used in the execution data flow and/or by changing the inlet and/or the outlet endpoint, etc. Such substantial alterations of the ESB configuration are not described in WO2009102790A1, as WO2009102790A1 only describes a predetermined, albeit conditional, execution data flow.

Another prior art computer implemented gateway is known from US 2010/0150169 A1.

Therefore it is an object of the present invention to provide a computer implemented gateway in which the ESB architecture can be altered during gateway runtime.

This is achieved according to the present invention by a computer implemented gateway according to claim 1.

The invention also relates to a software product for implementing the computer implemented gateway according to the invention, according to claim 15, and a data carrier comprising such software product, according to claim 16.

Preferred embodiments are defined in the dependent claims.

Other details and advantages of the computer implemented gateway according to the invention will become apparent from the enclosed figures and description of preferred embodiments of the invention.
Figure 1 shows a schematic overview of a computer implemented gateway according to the invention in use.
Figure 2 shows a schematic overview of an embodiment of the computer implemented gateway according to the invention.
Figure 3 shows a schematic overview of a different embodiment of the computer implemented gateway according to the invention.

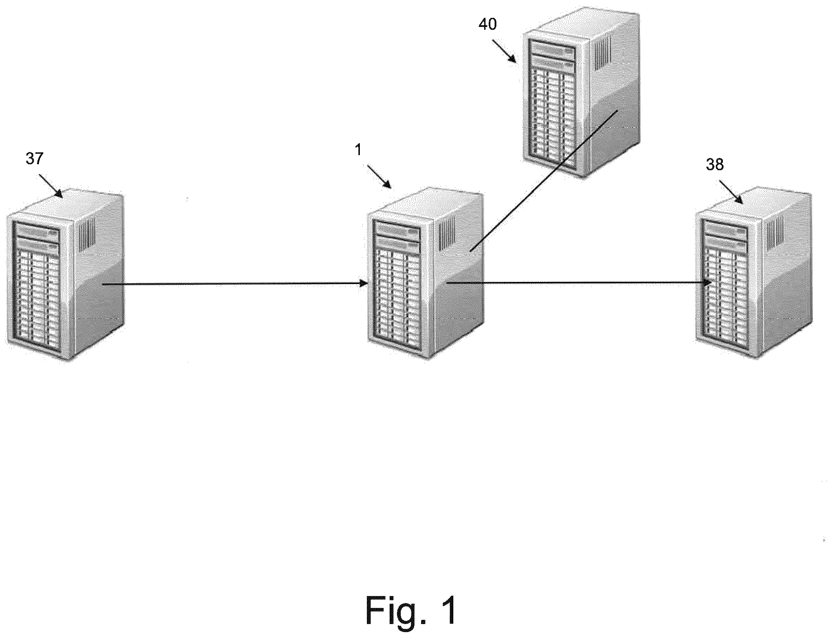

The schematic overview of figure 1 shows the computer implemented gateway 1 according to the invention in use. As shown in figure 1, the gateway 1 preferably is implemented in a reconfigurable computer unit.

The gateway 1 is interconnected with an input endpoint 37 and an output endpoint 38. The endpoints 37, 38 are depicted schematically as computer servers. For example, the endpoints 37, 38 often are enterprise servers, more in particular middleware services, for example network middleware services, such as for example network server software, for example a http/https server, a mail server, for example a POP3 or SMTP server, an ftp/sftp server, a Java Message Service (JMS) listener, TCIL server, etc. Although the gateway 1 and the endpoints 37, 38 are depicted as single computers, this is not critical for the invention and the gateway 1 and the endpoints 37, 38 can for example respectively comprise several interconnected computers, such as computers interconnected through a computer network. The precise configuration, more in particular the physical configuration, of the gateway 1 and the endpoints 37, 38 is however not critical for the invention and can be further determined by the person skilled in the art.

The gateway 1 and the endpoints 37, 38 preferably are interconnected by a computer network, schematically represented here by the arrows indicating the flow of business data from the input endpoint 37 through the gateway 1 to the output endpoint 38. The type of interconnection between the gateway 1 and the endpoints 37, 38 however is not critical for the invention and can be further determined by the person skilled in the art.

Although figure 1 only shows a single input endpoint 37 interconnected to a single output endpoint 38, this is not critical for the invention and the gateway 1 could also interconnect a multiple of input endpoints to a single output endpoint 38, a multiple of output endpoints to a single input endpoint 37 or the input endpoint and the output endpoint could even be identical, depending on the desired configuration.

Figure 1 further shows that the gateway 1 further comprises a central configuration system 40. The configuration system 40 is shown here as a separate computer interconnected to the gateway 1, for example by a computer network. This is however not critical for the invention and the configuration system 40 can also be part of the gateway 1 or could for example be part of the computer comprising the endpoint 37, 38, depending on the desired configuration.

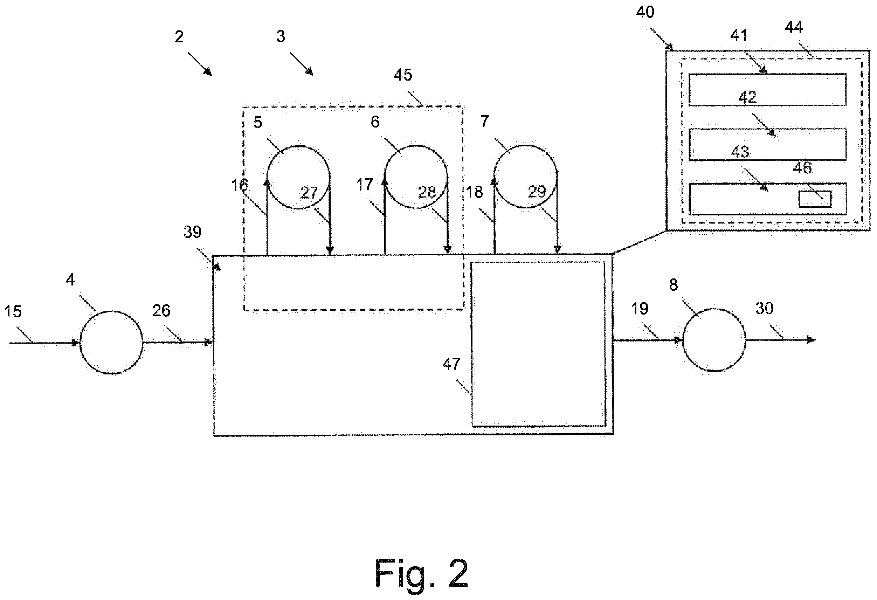

The embodiment of the computer implemented gateway 1 according to the invention shown in figure 2 comprises an Enterprise Service Bus (ESB) architecture 2 comprising at least one ESB 3 for performing data transformations.

Figure 2 also in more detail shows the configuration system 40 which is further communicatively coupled to the computer implemented gateway 1.

The ESB 3 comprises a plurality of data processing components 4, 5, 6, 7, 8, briefly 4 - 8, each arranged for receiving first business data via at least a first communication channel 15 - 19 of the data processing component 4 - 8. The data processing components 4, 5, 6, 7, 8 are further provided to generate in response to the arrival of the first business data a second business data. The second business data is then further transmitted via a second communication channel 26 - 30 of the data processing component 4 - 8.

The ESB further comprises a core component 39 communicatively coupled to each of the data processing components 4 - 8 via at least one of the communication channels 15 - 19 of the respective data processing components 4 - 8 and arranged for controlling a flow of business data through the respective data processing components 4 - 8 based on an execution data flow determined by an ESB configuration instance.

As can be seen in figure 2, the core component 39 further preferably comprises a storage area 47 for example for storing the business data received from the endpoints 37, 38. Making it for example possible to intermediately store the business data before it is being forwarded to one of the core data processing components 5, 6, 7. The storage area 47 is however not critical for the invention and can be omitted.

Although not shown in figure 2, the data processing component 4 is connected to an input endpoint 37 through its first communication channel 15 and the data processing component 8 is connected to an output endpoint 38 through its second communication channel 30. In other words, the ESB comprises endpoint data processing components 4, 8. The first communication channel 15 of endpoint data processing component 4 is connected to the input endpoint 37 and the second communication channel 26 is connected to the core component 39. The first communication channel 19 of endpoint data processing component 8 is connected to the core component 39 and the second communication channel 30 is connected to the output endpoint 38. The input endpoint data processing component 4 is provided to receive the business data from the input endpoint 37 via the first communication channel 15 after retrieval by the input endpoint data processing component 4, generate the second business data and transmit the thus generated second business data via the second communication channel 26 to the core component 39. The output endpoint data processing component 8 is provided to receive first business data from the core component 39 via the first communication channel 19, generate the second business data and transmit the thus generated second business data via the second communication channel 30 to the output endpoint 38.

The endpoint data processing components 4, 8 are adapted to the specific endpoints 37, 38. For example, the endpoints data processing components 4, 8 often are connected to enterprise servers, more in particular to middleware services, for example network middleware services, such as for example network server software, for example a http/https server, a mail server, for example a POP3 or SMTP server, an ftp/sftp server, a Java Message Service (JMS) listener, TCIL server, etc. and as such are adapted to retrieve the business data from the enterprise servers. The input endpoint data processing component 4 for example can be adapted to retrieve mail from a mail server and is for example provided to strip information which is irrelevant for the further treatment of the business data from the business data, such as for example specific mail related information, such as for example information in the e-mail header. According to further examples, the input endpoint data processing component 4 can be adapted to simply retrieve a file from an ftp server upon, for example, addition of a file to the ftp server, to receive a request from a http server, etc. The output endpoint data processing component 8 can for example be provided to make an e-mail server send out the second business information received via the first communication channel 19 in an e-mail, for example as an attachment to the e-mail. Thereto, the output endpoint data processing component 8 can be provided to provide the mail server with all necessary data for sending out the e-mail, such as for example mail address, etc. According to further examples, the output endpoint data processing component 8 can be adapted to simply put a file on an ftp server, to send a message to an http server, etc.

Figure 2 further shows that the ESB comprises at least one core data processing component 5, 6, 7, and even at least two data processing components 5, 6, 7, provided for altering the first business data received from the core component 39 via the first communication channel 16, 17, 18 connected to the core component 39 into the second business data and transmitting the second business data via the second communication channel 27, 28, 29 connected to the core component 39 back to the core component 39.

For example, after retrieval of business data by the input endpoint data processing component 4 from the input endpoint 37, the second business data, with respect to the input endpoint 4, is transmitted to the core component 39. The core component 39, based on the execution data flow determined by an ESB configuration instance, then forwards the business data, now called first business data with respect to the core data processing component 5, to the core data processing component 5 via the first communication channel 16. In response, the core data processing component 5 alters the first business data to the second business data and then transmits the second business data via the second communication channel 27 back to the core component 39. The core component 39 then, according to the execution data flow determined by the ESB configuration instance, then could transmit the received business data, now called first business data with respect to the core data processing component 6, to the core data processing component 6 via the first communication channel 17. In response, the core data processing component 6 alters the first business data to the second business data and then transmits the second business data via the second communication channel 28 back to the core component 39. The core component could, for example, also instead or thereafter, according to the execution data flow determined by the ESB configuration instance, transmit the business data, now called the first business data with respect to the output endpoint data processing component 8, to the output endpoint data processing component 8 via the first communication channel 19, which in response outputs the business data to the output endpoint 39.

This way, by steering the flow of business data through the different core data processing components according to the execution data flow determined by the ESB configuration instance, the business data retrieved at the input endpoint 37 can be processed before sending it to the output endpoint 38.

The core data processing components 5, 6, 7 can have a multitude of functionalities such as, but certainly not limited to any one or more of, analyze the first business data, extract relevant data from the first business data, format business data, transform business data, etc.

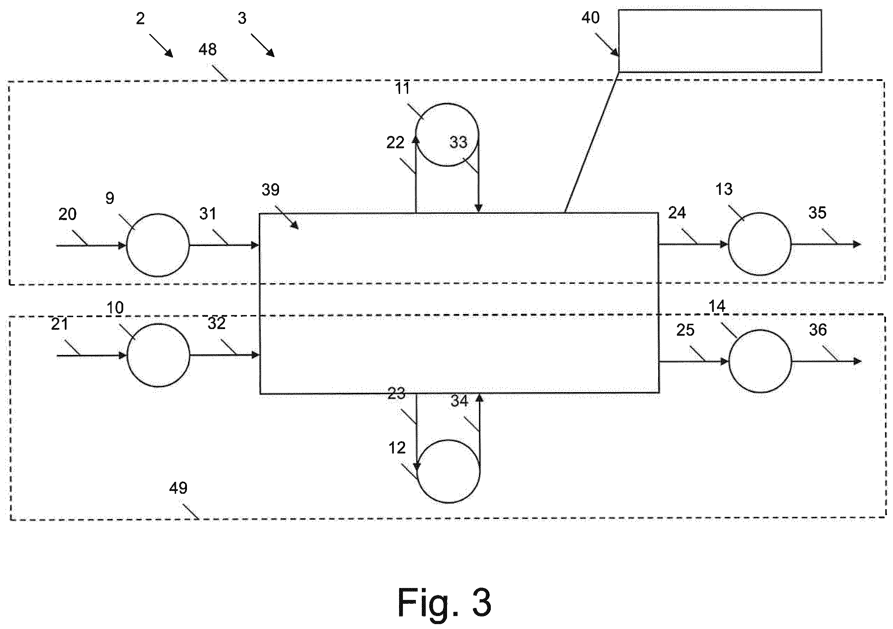

Although the core data processing components 5, 6, 7 shown in figure 2 and 3 are provided with a single first communication channel 16, 17, 18 and a single second communication channel 27, 28, 29, such a configuration is certainly not critical for the invention and more than one first or second communication channel 16, 17, 18, 27, 28, 29 are possible.

For example, it is possible that the core data processing component is provided to receive, for example a plurality of sets of first business data, each set for example through a respective first communication channel, and generate in response to the arrival of the plurality of sets of first business data the second business data. Furthermore it is possible that the core data processing component is provided to receive the first business data through the first communication channel and generate in response to the arrival of the first business data a plurality of sets of second business data, each set being transmitted through for example a respective second communication channel. Moreover, a combination of these two possibilities is possible such that the core data processing component is provided to receive, for example a plurality of sets of first business data, each set for example through a respective first communication channel, and generate in response to the arrival of the plurality of sets of first business data a plurality of sets of second business data, each set being transmitted through for example a respective second communication channel.

In addition, the plurality of first and second communication channels could also be used to receive other information than for example business data. For example, a second first communication channel could be used by the corresponding core data processing component to retrieve, through the second first communication channel, for example a configuration for the core data processing component. This way it for example becomes possible to configure the core data processing component depending on the input received through the second first communication channel and, for example, to provide several alternatives for configuring the core data processing component.

As often a certain sequence 45 of core data processing components 5, 6 is used, a core data processing template 46 defining a sequence 45 of at least two core data processing components 5, 6 can be defined and re-used when generating the ESB configuration instance.

After receipt of the business data by the endpoint data processing components, next to sending the business data to the core data processing component 5, the core component 39 could also be set up to send, at least part of the business data, to, for example, another data processing component, for example core data processing component 7, via the first communication channel 18 and/or endpoint data processing component 8 via the first communication channel 19, according to the execution data flow determined by the ESB configuration instance.

Figure 2 further shows that the central configuration system 40 is arranged for receiving user configuration settings 44. The central configuration system 40 is further arranged for generating, based on at least the user configuration settings 44, the ESB configuration instance during gateway run-time. As the configuration system 40 shown in figure 2 is further communicatively coupled to the computer implemented gateway 1, during configuration, the data processing components 4 - 8 can be configured inside the computer implemented gateway 1, thereby enabling for ESB components to be added to the ESB configuration instance during run-time of the gateway 1.

As shown in figure 2, the user configuration settings 44 may comprise endpoint configuration settings 41 defining the at least one endpoint data processing component 4, 8 of the ESB configuration instance.

As further shown in figure 2, the central configuration system 40 may comprise endpoint configuration information 42 allowing the at least one endpoint data processing component 4, 8 to communicate with the endpoint 37, 38 to which the at least one endpoint data processing component 4, 8 is connected. More preferably, as shown in figure 2, the user configuration settings 44 comprise the endpoint configuration information 42 defining the endpoint configuration information 42 of the ESB configuration instance.

The endpoint configuration information 42 for example comprises at least one or more from the list of: address information, preferably IP address of the endpoint, port of the endpoint, login information of the endpoint, for example information relating to login name and/or password, mail address, file system information, subfolder, etc. So for example, when the output endpoint data processing component 8 is provided to provide a mail server to send out an e-mail, the endpoint configuration information 42 may comprise information on the recipient's e-mail address, the IP address of the mail server, the desired content, such as for example body or title, of the e-mail, etc.

As also shown in figure 2, the central configuration system 40 may comprise a core data processing template 46 defining a sequence 45 of at least two core data processing components 5, 6. More preferably, the user configuration settings 44 comprises a core data processing component configuration 43, preferably comprising the template 46 as shown in figure 2, defining a sequence 45 of at least one core data processing component.

Figure 2 finally shows that, preferably, the endpoint configuration settings 41, the endpoint configuration information 42 and the core data processing component configuration 43 of the user configuration settings 44 are stored in separate files of the central configuration system 40 and together define the execution data flow from the input endpoint 37 to the output endpoint 38.

Although not shown, the user configuration settings 44 can be adapted by a user, for example by amending the user configuration settings 44, for example by amending the endpoint configuration settings 41, the endpoint configuration information 42 and/or the core data processing component configuration 43, for example the files in which the one or more of them are stored, if present in the user configuration settings 44. Thereto, the central configuration system 40 could for example comprise, although not shown in figure 2, an interface allowing the user to amend the endpoint configuration settings 41, the endpoint configuration information 42 and/or the core data processing component configuration 43. The interface could for example be a command-line interface onto which the user could log on, for example, remotely.

The core data processing component configuration 43 could for example be created in a graphical user interface (GUI) environment and then for example later on copied onto the central configuration system 40. Although such GUI environment makes it easier for a user to provide the core data processing component configuration 43, it is not critical for the invention and the core data processing component configuration 43 could be provided to the central configuration system 40 in any way deemed appropriate by the person skilled in the art.

The schematic overview of the further embodiment of the computer implemented gateway 1 according to the invention shown in Figure 3 differs from the gateway 1 shown in figure 2.

For reasons of clarity, the ESB architecture only comprises two core data processing components 11, 12. The core data processing components 11, 12 are connected to the core component via the respective first 22, 23 and second 33, 34 communication channel. As described above, the number of core data processing components of the ESB architecture is however not critical for the invention and the ESB architecture could also comprise more or even less core data processing components.

Further, the ESB architecture comprises four endpoint data processing components 9, 10, 13, 14, of which two are input endpoint data processing components 9, 10 and two are output endpoint data processing components 13, 14. The input data processing components 9, 10 are connected to the core component 39 via the respective second communication channels 31, 32 and are connected via the respective first communication channels 20, 21 to at least one endpoint. Although the endpoints are not shown in figure 3, the respective input endpoint data processing components 9, 10 are connected to respective different endpoints. The output data processing components 13, 14 are connected via the respective first communication channels 24, 25 to the core component 39 and are connected to at least one output endpoint via the respective second communication channels 35, 36. Again, although the output endpoints are not shown in figure 3, the respective output endpoint data processing components 13, 14 are preferably connected to respective different endpoints.

Further it is shown in figure 3 that the ESB architecture 2 has an ESB configuration instance which comprises two Enterprise Service Buses (ESBs) 48, 49.

The first ESB 48 shown in figure 3 comprises a single core data processing component 11 connected to the single core component 39 with a single input endpoint data processing component 9 and a single output data processing component 13. The second ESB 49 shown in figure 3 comprises a single core data processing component 12 connected to the single core component 39 with a single input endpoint data processing component 10 and a single output data processing component 14. Such a configuration is however not critical for the invention and it is possible that the first and/or the second ESB 48, 49 comprise a plurality of core data processing components 11, 12, as for example shown in figure 2, and a plurality of endpoint data processing components as described above, depending on the desired configuration.

The ESB configuration instance is preferably determined by the central configuration system 40, as described above. Although not specifically shown, the central configuration system 40 has a similar configuration as described above and therefore for example the endpoint configuration settings 41, the endpoint configuration information 42 and the core data processing component configuration 43 of the user configuration settings 44 are stored on the central configuration system 40 and together define the execution data flow from the input endpoints to the output endpoints.

The structure of the central configuration system 40 and more in particular the user configuration settings can be determined depending on the desired configuration. For example, the user configuration settings can comprise different respective sets of endpoint configuration settings, the endpoint configuration information and the core data processing component configuration with each set of endpoint configuration settings, the endpoint configuration information and the core data processing component configuration defining a respective ESB. For example, in such a configuration the different sets of endpoint configuration settings, the endpoint configuration information and the core data processing component configuration can be stored in different set of files stored in the central configuration system 40. According to a different embodiment, a single set of endpoint configuration settings, the endpoint configuration information and the core data processing component configuration can also be provided with the single set of endpoint configuration settings, the endpoint configuration information and the core data processing component configuration defining the plurality of ESBs.

As described above, the user configuration settings can be adapted by a user, for example by amending the user configuration settings, for example by amending the endpoint configuration settings, the endpoint configuration information and/or the core data processing component configuration, for example the files in which the one or more of them are stored, if present in the user configuration settings. As described above, this could be done by the interface allowing the user to amend the endpoint configuration settings, the endpoint configuration information and/or the core data processing component configuration. Although not shown in figure 3, it is also possible to add an ESB to an ESB architecture by amending the ESB configuration instance on the central configuration system 40, for example by
- adding at least one endpoint, for example by adding an input and an output endpoint data processing component, to endpoint configuration settings, for example by adding them to existing endpoint configuration settings or by adding them to new endpoint configuration settings,
- adding at least one sequence of at least one core data processing component defining at least partly the execution data flow by adding the at least one core component and their sequence defining the desired execution data flow to a core data processing component configuration, for example by adding them to an existing core data processing component configuration or by adding them to a new core data processing component configuration and
- adding endpoint configuration information, for example by adding the information to existing endpoint configuration information or by adding them to new endpoint configuration information.

As the information present in the user configuration settings defining an ESB, preferably is split up, part of the information can be re-used in configuring a second ESB. For example, referring to the example above, the endpoint configuration settings and the core data processing component configuration can be copied when setting up another ESB and only the endpoint configuration information for example needs to be adapted for the second ESB, making setting up a second ESB substantially faster.

## Claims

1. A computer implemented gateway (1) comprising:
an Enterprise Service Bus "ESB" architecture (2) comprising at least one ESB (3) for performing data transformations, the at least one ESB (3) comprising:
a plurality of data processing components (4 - 14) each arranged for receiving first business data via a respective first communication channel (15 - 25) of the data processing component (4 - 14), and generating in response to the arrival of the first business data a second business data, and further transmitting the second business data via a respective second communication channel (26 - 36) of the data processing component (4 - 14); and
a core component (39) communicatively coupled to each of the data processing components (4 - 14) via at least one of the first and second communication channels (15 - 36) of the respective data processing components (4 - 14) and arranged for controlling a flow of business data through the respective data processing components (4 - 14) from an input endpoint (37) of the gateway (1) to an output endpoint (38) of the gateway (1) based on an execution data flow determined by an ESB configuration instance, wherein the ESB configuration instance defines a configuration of the ESB architecture (2);
**wherein**
the plurality of data processing components (4 - 14) comprise at least one endpoint data processing component (4, 8, 9, 10, 13, 14) and at least one core data processing component (5, 6, 7, 11, 12), wherein one of the respective first or second communication channel (15, 30, 20, 21, 35, 36) of the at least one endpoint data processing component (4, 8, 9, 10, 13, 14), being connected to one of the input endpoint (37) or output endpoint (38) and another one of the respective first or second communication channel (26, 19, 31, 32, 24, 25) being connected to the core component (39), and wherein the at least one core data processing component (5, 6, 7, 11, 12) alters the respective first business data received from the core component (39) via the respective first communication channel (16, 17, 18, 22, 23) connected to the core component (39) into the respective second business data and transmitting the respective second business data via the respective second communication channel (27, 28, 29, 33, 34) connected to the core component (39) back to the core component (39);
**wherein**
the gateway further comprises a central configuration system (40) operatively coupled to the at least one ESB, the central configuration system (40) being arranged for receiving user configuration settings (44) and generating, based on at least the user configuration settings (44), the ESB configuration instance during gateway run-time;
**wherein** the central configuration system (40) is arranged for storing the user configuration settings (44) comprising respectively endpoint configuration settings (41), endpoint configuration information (42) and core data processing component configuration (43), that together define the execution data flow from the input endpoint (37) to the output endpoint (38), in respective separate files of the central configuration system;
**and wherein** the central configuration system (40), to generate said ESB configuration instance, is further arranged for configuring a completely new ESB architecture and/or re-configuring an existing ESB architecture by keeping part of the ESB architecture unchanged, and for configuring and/or re-configuring the data processing components (4-14) inside the computer implemented gateway during configuration and/or re-configuration of the ESB architecture, and for using a respective additional first communication channel of the core data processing components (5, 6, 7, 11, 12) to configure and/or re-configure the core data processing components.

2. A computer implemented gateway (1) according to claim 1, wherein the endpoint configuration settings (41) define the endpoint data processing component (4, 8, 9, 10, 13, 14) of the ESB configuration instance.

3. A computer implemented gateway (1) according to claim 1 or 2, wherein the ESB comprises an input endpoint data processing component (4, 9, 10) provided for retrieving business data from the input endpoint (37), the respective first communication channel (15, 20, 21) being connected to the input endpoint (37) and the respective second communication channel (26, 31, 32) being connected to the core component (39), the input endpoint data processing component (4, 9, 10) being provided to receive the respective first business data from the input endpoint (37) via the first communication channel (15, 20, 21) after retrieval by the input endpoint data processing component (4, 9, 10), generate the respective second business data and transmit the thus generated respective second business data via the respective second communication channel (26, 31, 32) to the core component (39).

4. A computer implemented gateway (1) according to any one of the preceding claims, wherein the ESB comprises an output endpoint data processing component (8, 13, 14) provided for outputting business data to the output endpoint (38), the respective second communication channel (30, 35, 36) being connected to the output endpoint (38) and the respective first communication channel (19, 24, 25) being connected to the core component (39), the output endpoint data processing component (8, 13, 14) being provided to receive respective first business data from the core component (39) via the respective first communication channel (19, 24, 25), generate the respective second business data and transmit the thus generated respective second business data via the respective second communication channel (30, 35, 36) to the output endpoint (38).

5. A computer implemented gateway (1) according to any one of the preceding claims, wherein the endpoint configuration information (42) allows the at least one endpoint data processing component (4, 8, 9, 10, 13, 14) to communicate with the endpoint (37, 38) to which the at least one endpoint data processing component (4, 8, 9, 10, 13, 14) is connected.

6. A computer implemented gateway (1) according to claim 5, wherein the endpoint configuration information (42) defines the endpoint configuration information (42) of the ESB configuration instance.

7. A computer implemented gateway (1) according to any one of the preceding claims, wherein the ESB comprises at least two core data processing components (5, 6, 7, 11, 12).

8. A computer implemented gateway (1) according to claim 7, wherein the central configuration system (40) comprises a core data processing template (46) defining a sequence (45) of at least two core data processing components (5, 6).

9. A computer implemented gateway (1) according to claim 7 or claim 8, wherein the core data processing component configuration (43) defines a sequence (45) of at least two core data processing components (4 - 14).

10. A computer implemented gateway according to claim 9 in combination with claim 10, wherein the core data processing component configuration (43) comprises the core data processing template (46).

11. A computer implemented gateway (1) according to any one of the preceding claims, wherein the execution data flow further provides to the core an error handling flow for handling error data received from the data processing components.

12. A computer implemented gateway (1) according to claim 11, wherein the ESB comprises at least one error core data processing component, the error handling flow defining the at least one error core data processing component for sending error message notifications to the endpoints of the ESB.

13. A computer implemented gateway (1) according to any one of the preceding claims, wherein the core component (39) further comprises a storage area (47) for storing the business data received from the input endpoint (37).

14. A computer implemented gateway (1) according to any of the preceding claims, wherein the gateway (1) is implemented in a reconfigurable computer unit.

15. Software product for implementing, when executed on a reconfigurable computer unit, the computer implemented gateway (1) according to any one of the preceding claims.

16. Data carrier comprising a software product according to claim 15.

## Patentansprüche

1. Computerimplementiertes Gateway (1), Folgendes umfassend:
eine Enterprise Service Bus "ESB" Architektur (2), die wenigstens einen ESB (3) zum Ausführen von Datentransformationen umfasst, wobei der wenigstens eine ESB (3) Folgendes umfasst:
mehrere Datenverarbeitungskomponenten (4 - 14), von denen jede dafür eingerichtet ist, erste geschäftliche Daten über einen zugehörigen ersten Kommunikationskanal (15 - 25) der Datenverarbeitungskomponente (4 - 14) zu empfangen und in Reaktion auf das Eintreffen der ersten geschäftliche Daten zweite geschäftliche Daten zu erzeugen und außerdem über einen zugehörigen zweiten Kommunikationskanal (26 - 36) der Datenverarbeitungskomponente (4 - 14) die zweiten geschäftliche Daten zu übertragen; und
eine Kernkomponente (39), die kommunikationsfähig mit jeder der Datenverarbeitungskomponenten (4 - 14) verbunden ist, über wenigstens einen von dem ersten und zweiten Kommunikationskanal (15 - 36) der jeweiligen Datenverarbeitungskomponenten (4 - 14), und die dafür eingerichtet ist, einen Fluss von geschäftliche Daten durch die jeweiligen Datenverarbeitungskomponenten (4 - 14) von einem Eingabe-Endpunkt (37) des Gateways (1) zu einem Ausgabe-Endpunkt (38) des Gateways (1) zu steuern, basierend auf einem Ausführungsdatenfluss, der von einer ESB-Konfigurationsinstanz festgelegt wird, wobei die ESB-Konfigurationsinstanz eine Konfiguration für die ESB-Architektur (2) definiert;
wobei
die mehreren Datenverarbeitungskomponenten (4 - 14) wenigstens eine Endpunkt-Datenverarbeitungskomponente (4, 8, 9, 10, 13, 14) und wenigstens eine Kern-Datenverarbeitungskomponente (5, 6, 7, 11, 12) umfassen, wobei einer von dem zugehörigen ersten oder zweiten Kommunikationskanal (15, 30, 20, 21, 35, 36) von der wenigstens einen Endpunkt-Datenverarbeitungskomponente (4, 8, 9, 10, 13, 14) mit einem von dem Eingabe-Endpunkt (37) oder dem Ausgabe-Endpunkt (38) verbunden ist, und ein anderer von dem zugehörigen ersten oder zweiten Kommunikationskanal (26, 19, 31, 32, 24, 25) mit der Kernkomponente (39) verbunden ist, und wobei die wenigstens eine Kern-Datenverarbeitungskomponente (5, 6, 7, 11, 12) die zugehörigen ersten geschäftliche Daten, die von der Kernkomponente (39) über den zugehörigen ersten Kommunikationskanal (16, 17, 18, 22, 23), der mit der Kernkomponente (39) verbunden ist, empfangen werden, in die zugehörigen zweiten geschäftliche Daten umwandelt und die die zugehörigen zweiten geschäftliche Daten über den zugehörigen zweiten Kommunikationskanal (27, 28, 29, 33, 34), der mit der Kernkomponente (39) verbunden ist, zurück zur Kernkomponente (39) überträgt;
wobei
das Gateway außerdem ein zentrales Konfigurationssystem (40) umfasst, das funktionsfähig mit dem wenigstens einen ESB verbunden ist, wobei das zentrale Konfigurationssystem (40) dafür eingerichtet ist, Benutzer-Konfigurationseinstellungen (44) zu empfangen und, basierend wenigstens auf den Benutzer-Konfigurationseinstellungen (44), die ESB-Konfigurationsinstanz während der Laufzeit des Gateways zu erzeugen;
wobei
das zentrale Konfigurationssystem (40) dafür eingerichtet ist, die Benutzer-Konfigurationseinstellungen (44), die zugehörige Endpunkt-Konfigurationseinstellungen (41), Endpunkt-Konfigurationsinformation (42) und eine Kern-Datenverarbeitungskomponente-Konfiguration (43) umfassen, die zusammen den Ausführungsdatenfluss vom Eingabe-Endpunkt (37) zum Ausgabe-Endpunkt (38) definieren, in jeweiligen getrennten Dateien des zentralen Konfigurationssystems zu speichern;
und wobei
das zentrale Konfigurationssystem (40), um die ESB-Konfigurationsinstanz zu erzeugen, außerdem dafür eingerichtet ist, eine vollständig neue ESB-Architektur zu konfigurieren und/oder eine vorhandene ESB-Architektur neu zu konfigurieren, indem ein Teil der ESB-Architektur unverändert beibehalten wird, und dafür, die Datenverarbeitungskomponenten (4 - 14) innerhalb des computerimplementierten Gateways während der Konfiguration und/oder Neukonfiguration der ESB-Architektur zu konfigurieren und/oder neu zu konfigurieren, und dafür, einen zugehörigen zusätzlichen ersten Kommunikationskanal der Kern-Datenverarbeitungskomponenten (5, 6, 7, 11, 12) zu verwenden, um die Kern-Datenverarbeitungskomponenten zu konfigurieren und/oder neu zu konfigurieren.

2. Computerimplementiertes Gateway (1) nach Anspruch 1, wobei die Endpunkt-Konfigurationseinstellungen (41) die Endpunkt-Datenverarbeitungskomponente (4, 8, 9, 10, 13, 14) der ESB-Konfigurationsinstanz definieren.

3. Computerimplementiertes Gateway (1) nach Anspruch 1 oder 2, wobei der ESB eine Eingabe-Endpunkt-Datenverarbeitungskomponente (4, 9, 10) umfasst, die dafür eingerichtet ist, geschäftliche Daten vom Eingabe-Endpunkt (37) abzurufen, wobei der zugehörige erste Kommunikationskanal (15, 20, 21) mit dem Eingabe-Endpunkt (37) verbunden ist und der zugehörige zweite Kommunikationskanal (26, 31, 32) mit der Kernkomponente (39) verbunden ist, wobei die Eingabe-Endpunkt-Datenverarbeitungskomponente (4, 9, 10) dafür eingerichtet ist, die entsprechenden ersten geschäftliche Daten vom Eingabe-Endpunkt (37) über den ersten Kommunikationskanal (15, 20, 21) zu empfangen, nach dem Abrufen durch die Eingabe-Endpunkt-Datenverarbeitungskomponente (4, 9, 10), die zugehörigen zweiten geschäftliche Daten zu erzeugen und die so erzeugten zugehörigen zweiten geschäftliche Daten über den zugehörigen zweiten Kommunikationskanal (26, 31, 32) zur Kernkomponente (39) zu übertragen.

4. Computerimplementiertes Gateway (1) nach einem der vorhergehenden Ansprüche, wobei der ESB eine Ausgabe-Endpunkt-Datenverarbeitungskomponente (8, 13, 14) umfasst, die dafür eingerichtet ist, geschäftliche Daten an den Ausgabe-Endpunkt (38) auszugeben, wobei der zugehörige zweite Kommunikationskanal (30, 35, 36) mit dem Ausgabe-Endpunkt (38) verbunden ist und der zugehörige erste Kommunikationskanal (19, 24, 25) mit der Kernkomponente (39) verbunden ist, wobei die Ausgabe-Endpunkt-Datenverarbeitungskomponente (8, 13, 14) dafür eingerichtet ist, entsprechende erste geschäftliche Daten von der Kernkomponente (39) über den zugehörigen ersten Kommunikationskanal (19, 24, 25) zu empfangen, die zugehörigen zweiten geschäftliche Daten zu erzeugen und die so erzeugten zugehörigen zweiten geschäftliche Daten über den zugehörigen zweiten Kommunikationskanal (30, 35, 36) zum Ausgabe-Endpunkt (38) zu übertragen.

5. Computerimplementiertes Gateway (1) nach einem der vorhergehenden Ansprüche, wobei die Endpunkt-Konfigurationsinformation (42) es der wenigstens einen Endpunkt-Datenverarbeitungskomponente (4, 8, 9, 10, 13, 14) gestattet, mit dem Endpunkt (37, 38) zu kommunizieren, mit dem die wenigstens eine Endpunkt-Datenverarbeitungskomponente (4, 8, 9, 10, 13, 14) verbunden ist.

6. Computerimplementiertes Gateway (1) nach Anspruch 5, wobei die Endpunkt-Konfigurationsinformation (42) die Endpunkt-Konfigurationsinformation (42) der ESB-Konfigurationsinstanz definiert.

7. Computerimplementiertes Gateway (1) nach einem der vorhergehenden Ansprüche, wobei der ESB wenigstens zwei Kern-Datenverarbeitungskomponenten (5, 6, 7, 11, 12) umfasst.

8. Computerimplementiertes Gateway (1) nach Anspruch 7, wobei das zentrale Konfigurationssystem (40) eine Kern-Datenverarbeitungsvorlage (46) umfasst, die eine Folge (45) von wenigstens zwei Kern-Datenverarbeitungskomponenten (5, 6) definiert.

9. Computerimplementiertes Gateway (1) nach Anspruch 7 oder Anspruch 8, wobei die Kern-Datenverarbeitungskomponente-Konfiguration (43) eine Folge (45) von wenigstens zwei Kern-Datenverarbeitungskomponenten (4 - 14) definiert.

10. Computerimplementiertes Gateway nach Anspruch 9 in Kombination mit Anspruch 10, wobei die Kern-Datenverarbeitungskomponente-Konfiguration (43) eine Kern-Datenverarbeitungsvorlage (46) umfasst.

11. Computerimplementiertes Gateway (1) nach einem der vorhergehenden Ansprüche, wobei der Ausführungsdatenfluss außerdem für den Kern einen Fehlerbehandlungsdatenfluss bereitstellt, um Fehlerdaten zu behandeln, die von den Datenverarbeitungskomponenten empfangen werden.

12. Computerimplementiertes Gateway (1) nach Anspruch 11, wobei der ESB wenigstens eine Fehler-Kern-Datenverarbeitungskomponente umfasst, wobei der Fehlerbehandlungsdatenfluss die wenigstens eine Fehler-Kern-Datenverarbeitungskomponente dafür definiert, Fehlernachricht-Benachrichtigungen an die Endpunkte des ESB zu senden.

13. Computerimplementiertes Gateway (1) nach einem der vorhergehenden Ansprüche, wobei die Kernkomponente (39) außerdem einen Speicherbereich (47) umfasst, um geschäftliche Daten zu speichern, die vom Eingabe-Endpunkt (37) empfangen werden.

14. Computerimplementiertes Gateway (1) nach einem der vorhergehenden Ansprüche, wobei das Gateway (1) in einer neu-konfigurierbaren Computereinheit implementiert ist.

15. Softwareprodukt, um, wenn es auf einer neu-konfigurierbaren Computereinheit ausgeführt wird, das computerimplementierte Gateway (1) nach einem der vorhergehenden Ansprüche zu implementieren.

16. Datenträger, der ein Softwareprodukt nach Anspruch 15 umfasst.

## Revendications

1. Passerelle implémentée par ordinateur (1) comprenant :
une architecture de bus de services d'entreprise « ESB » (2) comprenant au moins un ESB (3) pour réaliser des transformations de données, l'au moins un ESB (3) comprenant :
une pluralité de composants de traitement de données (4 - 14) agencés chacun pour recevoir des premières données commerciales via un premier canal de communication (15 - 25) respectif du composant de traitement de données (4 - 14), et générer en réponse à l'arrivée des premières données commerciales des secondes données commerciales, et transmettre en outre les secondes données commerciales via un second canal de communication (26 - 36) respectif du composant de traitement de données (4 - 14) ; et
un composant de cœur (39) couplé en communication à chacun des composants de traitement de données (4 - 14) via au moins l'un des premier et second canaux de communication (15 - 36) des composants de traitement de données (4 - 14) respectifs et agencé pour commander un flux de données commerciales à travers les composants de traitement de données (4 - 14) respectifs d'un point terminal d'entrée (37) de la passerelle (1) à un point terminal de sortie (38) de la passerelle (1) d'après un flux de données d'exécution déterminé par une instance de configuration ESB, dans laquelle l'instance de configuration ESB définit une configuration de l'architecture ESB (2) ;
dans laquelle
la pluralité de composants de traitement de données (4 - 14) comprennent au moins un composant de traitement de données de point terminal (4, 8, 9, 10, 13, 14) et au moins un composant de traitement de données de cœur (5, 6, 7, 11, 12), dans laquelle l'un du premier ou second canal de communication (15, 30, 20, 21, 35, 36) respectif de l'au moins un composant de traitement de données de point terminal (4, 8, 9, 10, 13, 14), étant connecté à l'un du point terminal d'entrée (37) ou du point terminal de sortie (38) et un autre du premier ou second canal de communication (26, 19, 31, 32, 24, 25) respectif étant connecté au composant de cœur (39), et dans laquelle l'au moins un composant de traitement de données de cœur (5, 6, 7, 11, 12) modifie les premières données commerciales respectives reçues en provenance du composant de cœur (39) via le premier canal de communication (16, 17, 18, 22, 23) respectif connecté au composant de cœur (39) en les secondes données commerciales respectives et transmet en retour les secondes données commerciales respectives via le second canal de communication (27, 28, 29, 33, 34) respectif connecté au composant de cœur (39) au composant de cœur (39) ;
dans laquelle
la passerelle comprend en outre un système de configuration central (40) couplé opérationnellement à l'au moins un ESB, le système de configuration central (40) étant agencé pour recevoir des réglages de configuration utilisateur (44) et générer, d'après au moins les réglages de configuration utilisateur (44), l'instance de configuration ESB pendant un temps d'exécution de passerelle ;
dans laquelle
le système de configuration central (40) est agencé pour stocker les réglages de configuration utilisateur (44) comprenant respectivement des réglages de configuration de point terminal (41), des informations de configuration de point terminal (42) et une configuration de composant de traitement de données de cœur (43), qui définissent ensemble le flux de données d'exécution du point terminal d'entrée (37) au point terminal de sortie (38), dans des fichiers séparés respectifs du système de configuration central ;
et dans laquelle
le système de configuration central (40), pour générer ladite instance de configuration ESB, est en outre agencé pour configurer une architecture ESB totalement nouvelle et/ou reconfigurer une architecture ESB existante en conservant une partie de l'architecture ESB inchangée, et pour configurer et/ou reconfigurer les composants de traitement de données (4 - 14) à l'intérieur de la passerelle implémentée par ordinateur pendant une configuration et/ou une reconfiguration de l'architecture ESB, et pour utiliser un premier canal de communication supplémentaire respectif des composants de traitement de données de cœur (5, 6, 7, 11, 12) pour configurer et/ou reconfigurer les composants de traitement de données de cœur.

2. Passerelle implémentée par ordinateur (1) selon la revendication 1, dans laquelle les réglages de configuration de point terminal (41) définissent le composant de traitement de données de point terminal (4, 8, 9, 10, 13, 14) de l'instance de configuration ESB.

3. Passerelle implémentée par ordinateur (1) selon la revendication 1 ou 2, dans laquelle l'ESB comprend un composant de traitement de données de point terminal d'entrée (4, 9, 10) prévu pour récupérer des données commerciales depuis le point terminal d'entrée (37), le premier canal de communication (15, 20, 21) respectif étant connecté au point terminal d'entrée (37) et le second canal de communication (26, 31, 32) respectif étant connecté au composant de cœur (39), le composant de traitement de données de point terminal d'entrée (4, 9, 10) étant prévu pour recevoir les premières données commerciales respectives en provenance du point terminal d'entrée (37) via le premier canal de communication (15, 20, 21) après récupération par le composant de traitement de données de point terminal d'entrée (4, 9, 10), pour générer les secondes données commerciales respectives et transmettre les secondes données commerciales respectives ainsi générées via le second canal de communication respectif (26, 31, 32) au composant de cœur (39).

4. Passerelle implémentée par ordinateur (1) selon l'une quelconque des revendications précédentes, dans laquelle l'ESB comprend un composant de traitement de données de point terminal de sortie (8, 13, 14) prévu pour fournir en sortie des données commerciales au point terminal de sortie (38), le second canal de communication (30, 35, 36) respectif étant connecté au point terminal de sortie (38) et le premier canal de communication (19, 24, 25) respectif étant connecté au composant de cœur (39), le composant de traitement de données de point terminal de sortie (8, 13, 14) étant prévu pour recevoir des premières données commerciales respectives en provenance du composant de cœur (39) via le premier canal de communication (19, 24, 25) respectif, pour générer les secondes données commerciales respectives et transmettre les secondes données commerciales respectives ainsi générées via le second canal de communication (30, 35, 36) respectif au point terminal de sortie (38).

5. Passerelle implémentée par ordinateur (1) selon l'une quelconque des revendications précédentes, dans laquelle les informations de configuration de point terminal (42) permettent à l'au moins un composant de traitement de données de point terminal (4, 8, 9, 10, 13, 14) de communiquer avec le point terminal (37, 38) auquel est connecté l'au moins un composant de traitement de données de point terminal (4, 8, 9, 10, 13, 14).

6. Passerelle implémentée par ordinateur (1) selon la revendication 5, dans laquelle les informations de configuration de point terminal (42) définissent les informations de configuration de point terminal (42) de l'instance de configuration ESB.

7. Passerelle implémentée par ordinateur (1) selon l'une quelconque des revendications précédentes, dans laquelle l'ESB comprend au moins deux composants de traitement de données de cœur (5, 6, 7, 11, 12).

8. Passerelle implémentée par ordinateur (1) selon la revendication 7, dans laquelle le système de configuration central (40) comprend un modèle de traitement de données de cœur (46) définissant une séquence (45) d'au moins deux composants de traitement de données de cœur (5, 6).

9. Passerelle implémentée par ordinateur (1) selon la revendication 7 ou la revendication 8, dans laquelle la configuration de composant de traitement de données de cœur (43) définit une séquence (45) d'au moins deux composants de traitement de données de cœur (4 - 14).

10. Passerelle implémentée par ordinateur selon la revendication 9 en combinaison avec la revendication 10, dans laquelle la configuration de composant de traitement de données de cœur (43) comprend le modèle de traitement de données de cœur (46).

11. Passerelle implémentée par ordinateur (1) selon l'une quelconque des revendications précédentes, dans laquelle le flux de données d'exécution fournit en outre au cœur un flux de gestion d'erreur pour gérer des données d'erreur reçues en provenance des composants de traitement de données.

12. Passerelle implémentée par ordinateur (1) selon la revendication 11, dans laquelle l'ESB comprend au moins un composant de traitement de données de cœur d'erreur, le flux de gestion d'erreur définissant l'au moins un composant de traitement de données de cœur d'erreur pour envoyer des notifications de message d'erreur aux points terminaux de l'ESB.

13. Passerelle implémentée par ordinateur (1) selon l'une quelconque des revendications précédentes, dans laquelle le composant de cœur (39) comprend en outre une zone de stockage (47) pour stocker les données commerciales reçues en provenance du point terminal d'entrée (37).

14. Passerelle implémentée par ordinateur (1) selon l'une quelconque des revendications précédentes, dans laquelle la passerelle (1) est implémentée dans une unité d'ordinateur reconfigurable.

15. Produit logiciel pour implémenter, lorsqu'il est exécuté sur une unité d'ordinateur reconfigurable, la passerelle implémentée par ordinateur (1) selon l'une quelconque des revendications précédentes.

16. Support de données comprenant un produit logiciel selon la revendication 15.
